# EUROPEAN PATENT APPLICATION

(11) **EP 3 091 726 A1**
(43) Date of publication of application: **09.11.2016**
(21) Application number: 16166280.4
(22) Date of filing: 20.04.2016
(51) Int. Cl.: H04N 1/00, H04N 1/10

(54) **DUPLEX AUTOMATIC DOCUMENT HANDLER (DADH) WITH ONE-PIECE PLATEN**

(30) Priority: 06.05.2015 US 201514705033
(71) Applicant: Xerox Corporation, Rochester, NY 14644 (US)
(72) Inventor: WILSHER, Michael John, Letchworth, SG6 2HJ (GB); DE ECHANIZ, Sebastian R., Middleton, MK10 9BH (GB); JOWETT, Simon Neil, St. Albans, AL1 5LZ (GB)
(74) Representative: Gill Jennings & Every LLP

(57) **Abstract**

According to exemplary document feeding devices disclosed herein, a transparent platen has a sheet side and a scanner side, opposite the sheet side. A scanner is located on the scanner side of the transparent platen. A document placing tray is located on the sheet side of the transparent platen and a document ejection tray is positioned above the document placing tray. The document placing tray is between the document ejection tray and the transparent platen. A ramp is located at an end of the transparent platen. A feeding path extends from the document placing tray through a scanning position on the transparent platen to the document ejection tray. The scanning position is adjacent to the end of the transparent platen. The feeding path comprises the ramp at the end of the transparent platen. The ramp turns the feeding path from the transparent platen toward the document ejection tray.

## Description

### BACKGROUND

Devices and methods herein generally relate to machines having automatic document handlers such as printers, copiers and/or multifunction devices and, more particularly, to sheet feeders used with scanners and transparent platens.

Generally, a document scanner converts images and/or text on a hardcopy of a document into electronic form. The document scanning process involves placing the document on a top surface of a transparent platen (e.g., a flat glass plate). A scanner carriage is then moved past the document along the bottom surface of the platen. The scanner carriage includes a light source that illuminates the document and, particularly, the images and/or text thereon. The carriage also includes an image sensor, which incorporates photosensitive devices (e.g., photodiodes or other photosensitive devices) that measure the intensity of light reflected from given areas of the document. The sensor data is then translated from analog to digital, thereby defining the picture elements (i.e., pixels) of the document being scanned. Combined, these pixels represent the document in electronic form.

Another example of a document scanning process involves a constant velocity transport (CVT) scanning system in which the document moves and the scanner carriage is stationary. In the CVT scanning system, a single stationary scanning system is utilized to scan the entire document while the document is moved past the scanning system. The CVT scanning system, conventionally, includes a full-width image sensor, such as a CCD array system, and a light source. As in the platen scanning system, the image sensor receives light reflected from the document and converts the light into electrical signals representing the intensity of the received light. The electrical signals are then passed on to an electronic subsystem which performs the necessary image processing operation so as to prepare the image data either for display on a display devices such as a CRT, for storage by a storage device such as a CD-ROM, or for recording or printing on a medium, such as a document, in a similar manner as described above.

Current implementations of devices, such as printers, copiers, and fax machines, incorporate automatic document feeders and both types of scanning processes, depending on user preferences. In order to provide a scanner carriage that is moveable for one type of scanning process and that is stationary for another type of scanning process a separate CVT glass, distinct from the transparent platen, is used. The separate CVT glass adds cost to the device and may present alignment issues for the scanner device, as well as adding additional space requirements.

### SUMMARY

According to exemplary document feeding devices disclosed herein, a transparent platen has a sheet side and a scanner side, opposite the sheet side. A scanner is located on the scanner side of the transparent platen. A document placing tray is located on the sheet side of the transparent platen and a document ejection tray is positioned above the document placing tray. The document placing tray is between the document ejection tray and the transparent platen. A ramp is located at an end of the transparent platen. A feeding path extends from the document placing tray through a scanning position on the transparent platen to the document ejection tray. The scanning position is adjacent to the end of the transparent platen. The feeding path comprises the ramp at the end of the transparent platen. The ramp turns the feeding path from the transparent platen toward the document ejection tray.

According to exemplary devices herein, a transparent platen is contained within a frame. The transparent platen has a sheet side and a scanner side, opposite the sheet side. A scanner is located on the scanner side of the transparent platen. The transparent platen has a constant velocity transport (CVT) scanning position at a first end of the transparent platen. A ramp is located at the first end of the transparent platen, defining a boundary of the CVT scanning position.

According to exemplary scanning devices herein, a transparent platen has a sheet side and a scanner side, opposite the sheet side. A document placing tray is located on the sheet side of the transparent platen. A document ejection tray is positioned above the document placing tray. The document placing tray is between the document ejection tray and the transparent platen. A scanner is located on the scanner side of the transparent platen. The transparent platen has a constant velocity transport (CVT) scanning position at an end of the transparent platen. A ramp is located adjacent to the end of the transparent platen. A feeding path extends from the document placing tray through the CVT scanning position on the transparent platen to the document ejection tray. The feeding path comprises the ramp adjacent to the end of the transparent platen, which defines a boundary of the CVT scanning position. The ramp turns the feeding path from the transparent platen toward the document ejection tray.

These and other features are described in, or are apparent from, the following detailed description.

### BRIEF DESCRIPTION OF THE DRAWINGS

Various examples of the devices and methods are described in detail below, with reference to the attached drawing figures, which are not necessarily drawn to scale and in which:
Figure 1 is a side-view block diagram of a multi-function device according to devices and methods herein;
Figure 2A is a side-view schematic diagram of an automatic document handler;
Figure 2B is a side-view of a typical two-piece platen;
Figure 2C is a plan view of a typical two-piece platen;
Figure 3A is a side-view schematic diagram of a duplex automatic document handler according to devices and methods herein;
Figure 3B is a side-view of a one-piece platen according to devices and methods herein; and
Figure 3C is a plan view of a one-piece platen according to devices and methods herein.

### DETAILED DESCRIPTION

The disclosure will now be described by reference to a multi-function device that includes an automatic document handler. While the disclosure will be described hereinafter in connection with specific devices and methods thereof, it will be understood that limiting the disclosure to such specific devices and methods is not intended. On the contrary, it is intended to cover all alternatives, modifications, and equivalents as may be included within the spirit and scope of the disclosure as defined by the appended claims.

For a general understanding of the features of the disclosure, reference is made to the drawings. In the drawings, like reference numerals have been used throughout to identify identical elements.

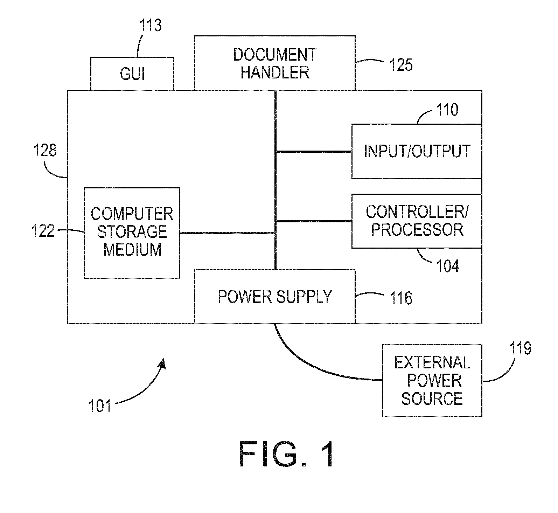

Figure 1 illustrates an exemplary multifunction device 101 that can be used with systems and methods herein and can comprise, for example, a printer, a copier, a fax machine, etc. The multifunction device 101 includes a controller/processor 104 and an input/output device 110 operatively connected to the controller/processor 104. The controller/processor 104 may be connected to a computerized network external to the multifunction device 101 through a communications port of the input/output device 110. In addition, the multifunction device 101 can include at least one accessory functional component, such as a graphic user interface assembly (GUI) 113. The GUI 113 acts as common interface for job submission and operates on power supplied from a power supply 116. An external power source 119 may provide electrical power to the multifunction device 101 through the power supply 116. The input/output device 110 is used for communications to and from the multifunction device 101. The controller/processor 104 controls the various actions of the multifunction device 101.

The multifunction device 101 may also include a non-transitory computer storage medium 122 (which can be optical, magnetic, capacitor based, etc.) that is readable by the controller/processor 104 and stores instructions that the controller/processor 104 executes to allow the multifunction device 101 to perform its various functions, such as those described herein.

The multifunction device 101 may also include a document handler 125 that can be used to scan original documents. The document handler 125 also operates on the power supplied from the external power source 119 (through the power supply 116). The document handler 125 may include an image input device capable of obtaining information from an image. The set of image input devices is intended to encompass a wide variety of devices such as, for example, digital document devices, computer systems, memory and storage devices, networked platforms such as servers and client devices which can obtain pixel values from a source device, and image capture devices. The set of image capture devices includes scanners, cameras, photography equipment, facsimile machines, photo reproduction equipment, digital printing presses, xerographic devices, and the like. A scanner is one image capture device that optically scans images, print media, and the like, and converts the scanned image into a digitized format. Common scanning devices include variations of the flatbed scanner, generally known in the art, wherein specialized image receptors move beneath a platen and scan the media placed on the platen. Modern digital scanners typically incorporate a charge-coupled device (CCD) or a contact image sensor (CIS) as the image sensing receptor(s). The scanning device produces a signal of the scanned image data. Such a digital signal contains information about pixels such as color value, intensity, and their location within the scanned image.

Thus, as shown in Figure 1, a device housing 128 has one or more functional components that operate on power supplied from the external power source 119, which may comprise an alternating current (AC) power source, through the power supply 116. The power supply 116 can comprise a power storage element (e.g., a battery) and connects to the external power source 119. The power supply 116 converts the external power into the type of power needed by the various components of the multifunction device 101.

As would be understood by those ordinarily skilled in the art, the multifunction device 101 shown in Figure 1 is only one example and the devices and methods herein are equally applicable to other types of printing devices that may include fewer components or more components. Such multifunctional devices are well known in the art and may comprise print engines based upon liquid or solid ink jet, electrophotography, other electrostatographic technologies, and other imaging technologies. The general principles of electrophotographic imaging are well known to many skilled in the art and are described above as an example of an imaging system to which the present concepts is applicable.

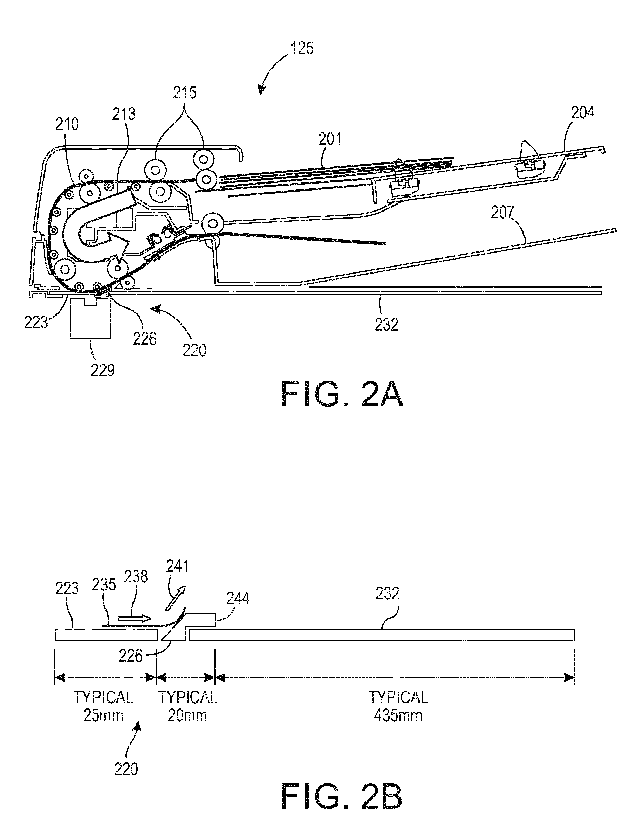

Figure 2A shows an enlarged schematic view of the document handler 125 in Figure 1. The original documents 201 are fed from the first tray 204 to the second tray 207 following a paper path 210 in a substantially counter-clockwise direction, indicated by arrow 213. The document handler 125 may include one or more drive rollers, such as 215, feeding the original documents 201 in a process direction from the first tray 204 to the second tray 207. Also, as further illustrated in Figure 2B, the multifunction device 101 includes a constant velocity transport (CVT) scanning station 220 that has a CVT glass 223 and CVT ramp 226. The CVT scanning station 220 is positioned after the drive roller 215 in the process direction. The scanner 229 may remain stationary in the CVT scanning station 220 during operation of the document handler 125. In some cases, a document 201 may be placed directly on the platen glass 232. When a document 11 is placed directly on the platen glass 232, the scanner 229 is then moved past the document 11 along the bottom surface of the platen glass 232.

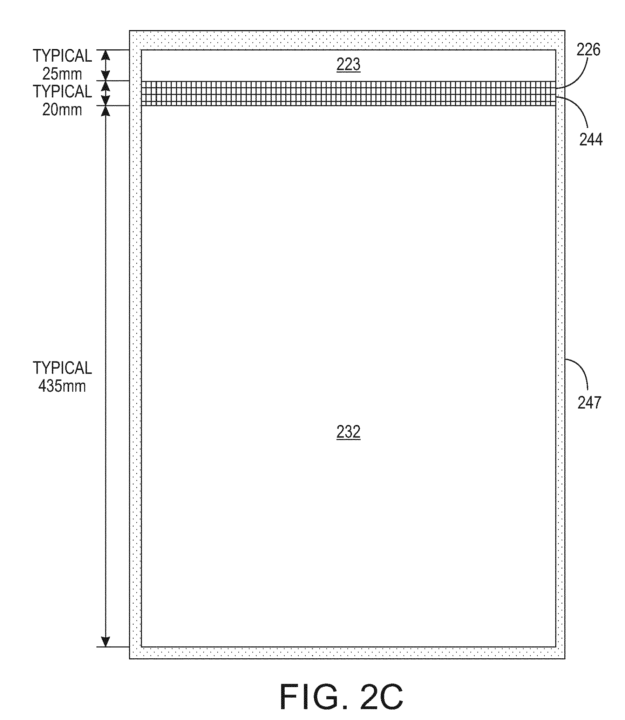

Referring to Figures 2B and 2C, a typical configuration requires two independent pieces of glass i.e., the CVT glass 223 and the platen glass 232, having the CVT ramp 226 between them. The CVT ramp 226 may be slightly concave toward the CVT glass 223. The CVT ramp 226 directs the paper path from the CVT scanning station 220 toward the second tray 207. That is, the scan document 235 runs along the CVT glass 223, as indicated by arrow 238, to be scanned. The scan document 235 is picked up off the CVT glass 223 by the CVT ramp 226, as indicated by arrow 241. In a typical configuration, the CVT ramp 226 initiates below the CVT glass 223 to prevent stubbing of the scan document 235. Additionally, in a typical configuration, a registration strip 244 is positioned at the end of the platen glass 232 in order to align the paper when placed directly on the platen glass 232. The CVT glass 223, CVT ramp 226, registration strip 244, and platen glass 232 may be disposed in a frame 247, as shown in Figure 2C.

This configuration requires two independent pieces of glass so that the CVT ramp 226 can be fitted below the CVT glass 223 in order to prevent stubbing of the paper. This leads to alignment and focus issues between the two pieces of glass (i.e., the CVT glass 223 and the platen glass 232). As shown in Figures 2B and 2C, the CVT glass 223 is typically approximately 25 mm wide and the CVT ramp 226 combined with the registration strip 244 is typically approximately 20 mm wide. The platen glass 232 has to be a little wider than approximately 435 mm in order to be able to scan this size. Moreover, the entire scanning surface within the frame 247 needs approximately 45 mm additional more space than the width of the platen glass 232 to accommodate the CVT glass 223 and the CVT ramp 226. However different sizes for use with for example, 8.5" x 11" platens are equally applicable.

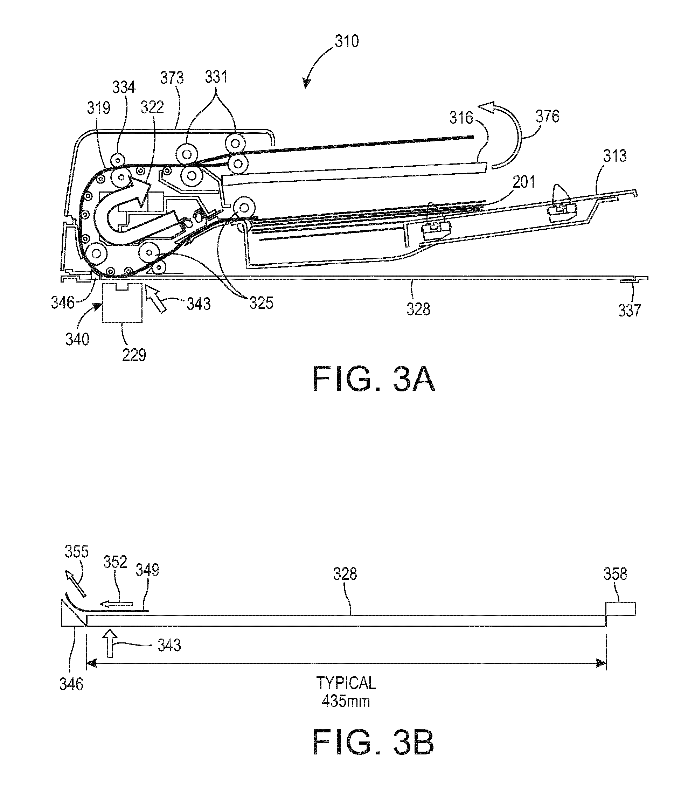

Figure 3A shows an enlarged view of a duplex automatic document handler (DADH) 310, according to devices and methods herein. The original documents 201 are fed from the document placing tray 313 to the document ejection tray 316, following a paper path 319 in a substantially clockwise direction, indicated by arrow 322. The DADH 310 may include one or more first drive rollers, such as 325, feeding the original documents 201 in a process direction from the document placing tray 313 to the document ejection tray 316. In contrast to the document handler 125 shown in Figure 2A, the document ejection tray 316 is positioned above the document placing tray 313. Also, as further illustrated in Figure 3B, this configuration has only a single transparent platen 328, which may comprise glass, mylar, or other appropriate clear substrate. The transparent platen 328 is positioned downstream of the first drive rollers 325 in the process direction. The transparent platen 328 is positioned relative to the first drive rollers 325 to receive the original documents 201 from the first drive rollers 325. The DADH 310 may further include one or more second drive rollers 331 positioned downstream of the transparent platen 328 in the process direction. The second drive rollers 331 are positioned relative to the transparent platen 328 to receive the original documents 201 from the transparent platen 328. One or more idler rollers, such as 334, may be positioned between the second drive rollers 331 and the transparent platen 328. Thus, the idler rollers 334 contact the original documents 201 as the sheets travel from the transparent platen 328 to the second drive rollers 331.

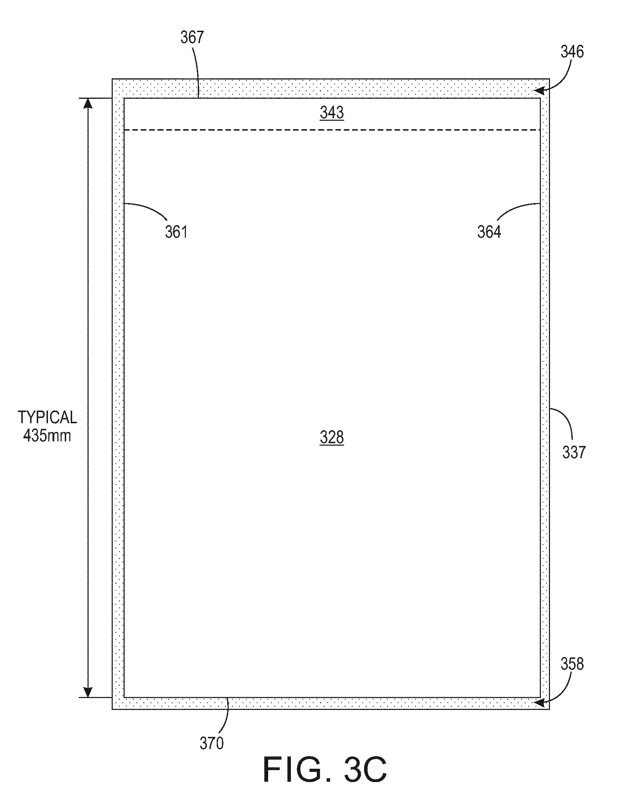

The transparent platen 328 is contained in a frame 337 and has a sheet side and a scanner side, opposite the sheet side. As shown in Figure 3C, the frame 337 may be rectangular. The scanner 229 is movably mounted within the frame 337 adjacent to the scanner side of the transparent platen 328. According to devices and methods herein, the scanner 229 can operate in two scan modes: in a first scan mode, the scanner 229 remains stationary in the CVT scanning position 340 while the original documents 201 are moved through the CVT scanning station 343 in the process direction; in a second scan mode, one of the original documents 201 is placed directly on the transparent platen 328 and the scanner 229 is moved along the scanner side of the transparent platen 328 scanning the document 201.

The DADH 310 includes a CVT ramp 346 adjacent to the CVT scanning position 340, but the CVT ramp 346 is moved to the end of the transparent platen 328 and the CVT scanning position 340 is moved onto the transparent platen 328. The CVT ramp 346 may be slightly concave toward the transparent platen 328. The CVT ramp 346 directs the paper path from the CVT scanning position 340 toward the document ejection tray 316. That is, as shown in Figure 3B, the scan document 349 runs along the portion of the transparent platen 328 in the CVT scanning station 343, as indicated by arrow 352, in order to be scanned. The scan document 349 is picked up off the transparent platen 328 in the CVT scanning position 340 by the CVT ramp 346, as indicated by arrow 355. The CVT ramp 346 initiates below the transparent platen 328 to prevent stubbing of the scan document 349. The scan document 349 moves from the document placing tray 313 to the document ejection tray 316, which is above the document placing tray and consequently the scan document 349 is tangent to the point of scanning in the CVT scanning station 343 at a smaller angle.

During operation in the first scan mode of the DADH 310, the scanner 229 remains stationary in the CVT scanning position 340. During operation in the second scan mode of the DADH 310, a document 201 is placed directly on the transparent platen 328, the scanner 229 is then moved past the document 201 along the bottom surface of the transparent platen 328.

A registration strip 358 may be positioned at the end of the transparent platen 328 opposite the CVT scanning station 343, in order to align the paper that is placed directly on the glass of the transparent platen 328. The transparent platen 328, CVT ramp 346, and registration strip 358 may be disposed in the frame 337, as shown in Figure 3C.

In other words, the transparent platen 328 comprises a continuous unbroken item (e.g., glass or other transparent material) that lacks any seams or other discontinuities from one edge 361 of the frame 337 to the other edge 364 of the frame 337 and from one end 367 of the frame 337 to the other end 370 of the frame 337. The scanner 229 is located between the edges 361, 364 of the frame 337. In the first scan mode described above, the scanner 229 remains stationary. In the second scan mode described above, the scanner 229 reciprocates from one end 367 to the other end 370. In both scan modes, the scanner 229 scans (i.e., optically detects printed markings on sheets) through the continuous, unbroken, transparent platen 328.

The DADH 310 may be part of a moveable cover 373 that pivots open to expose the transparent platen 328 for copying individual sheets of paper. It is contemplated that, in some configurations, the CVT ramp 346 and/or registration strip 358 may be included in the moveable cover 373. Furthermore, it is contemplated that the document ejection tray 316 may be moveable in order to be lifted up, as indicated by arrow 376, in order to provide access to the document placement tray 313.

This configuration uses the same glass for the transparent platen 328 and the CVT scanning position 340 so alignment and focus will be the same for both operations, improving optical quality. Additionally, the CVT ramp 346 can be part of the frame 337 surrounding the transparent platen 328, which reduces cost and saves space. With the transparent platen 328 being approximately 435 mm wide, a space saving of approximately 40 mm can be expected. However different sizes for use with, for example 8.5" x 11" platens are equally applicable. By removing the separate CVT glass 223, the scanner width can be reduced, or alternatively, the additional free width can be used for a larger scanning surface.

While some exemplary structures are illustrated in the attached drawings, those ordinarily skilled in the art would understand that the drawings are simplified schematic illustrations and that the claims presented below encompass many more features that are not illustrated (or potentially many less) but that are commonly utilized with such devices and systems. Therefore, it is not intended for the claims presented below to be limited by the attached drawings, but instead the attached drawings are merely provided to illustrate a few ways in which the claimed features can be implemented.

Many computerized devices are discussed above. Computerized devices that include chip-based central processing units (CPU's), input/output devices (including graphic user interfaces (GUI), memories, comparators, processors, etc. are well-known and readily available devices produced by manufacturers such as Dell Computers, Round Rock TX, USA and Apple Computer Co., Cupertino CA, USA. Such computerized devices commonly include input/output devices, power supplies, processors, electronic storage memories, wiring, etc., the details of which are omitted herefrom to allow the reader to focus on the salient aspects of the embodiments described herein. Similarly, scanners and other similar peripheral equipment are available from Xerox Corporation, Norwalk, CT, USA and the details of such devices are not discussed herein for purposes of brevity and reader focus.

The terms printer or printing device as used herein encompasses any apparatus, such as a digital copier, bookmaking machine, facsimile machine, multi-function machine, etc., which performs a print outputting function for any purpose. The details of printers, printing engines, etc., are well known by those ordinarily skilled in the art and are not described in detail herein to keep this disclosure focused on the salient features presented. The devices and methods herein can encompass devices that print in color, monochrome, or handle color or monochrome image data. All foregoing devices and methods are specifically applicable to electrostatographic and/or xerographic machines and/or processes.

The terminology used herein is for the purpose of describing particular devices and methods only and is not intended to be limiting of this disclosure. As used herein, the singular forms "a", "an", and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

In addition, terms such as "right", "left", "vertical", "horizontal", "top", "bottom", "upper", "lower", "under", "below", "underlying", "over", "overlying", "parallel", "perpendicular", etc., used herein, are understood to be relative locations as they are oriented and illustrated in the drawings (unless otherwise indicated). Terms such as "touching", "on", "in direct contact", "abutting", "directly adjacent to", etc., mean that at least one element physically contacts another element (without other elements separating the described elements). Further, the terms "automated" or "automatically" mean that once a process is started (by a machine or a user), one or more machines perform the process without further input from any user.

The corresponding structures, materials, acts, and equivalents of all means or step plus function elements in the claims below are intended to include any structure, material, or act for performing the function in combination with other claimed elements as specifically claimed. The descriptions of the various devices and methods of the present disclosure have been presented for purposes of illustration, but are not intended to be exhaustive or limited to the devices and methods disclosed. Many modifications and variations will be apparent to those of ordinary skill in the art without departing from the scope and spirit of the described devices and methods. The terminology used herein was chosen to best explain the principles of the devices and methods, the practical application or technical improvement over technologies found in the marketplace, or to enable others of ordinary skill in the art to understand the devices and methods disclosed herein.

It will be appreciated that the above-disclosed and other features and functions, or alternatives thereof, may be desirably combined into many other different systems or applications. Various presently unforeseen or unanticipated alternatives, modifications, variations, or improvements therein may be subsequently made by those skilled in the art which are also intended to be encompassed by the following claims. Unless specifically defined in a specific claim itself, steps or components of the devices and methods herein cannot be implied or imported from any above example as limitations to any particular order, number, position, size, shape, angle, color, or material.

## Claims

1. A document feeding device, comprising:
a transparent platen having a sheet side and a scanner side, opposite said sheet side;
a scanner located on said scanner side of said transparent platen;
a document placing tray located on said sheet side of said transparent platen;
a document ejection tray positioned above said document placing tray, said document placing tray being between said document ejection tray and said transparent platen;
a ramp at an end of said transparent platen; and
a feeding path extending from said document placing tray through a scanning position on said transparent platen to said document ejection tray,
said scanning position being adjacent said end of said transparent platen,
said feeding path comprising said ramp at said end of said transparent platen, and
said ramp turning said feeding path from said transparent platen toward said document ejection tray.

2. The document feeding device according to claim 1, further comprising:
a frame circumscribing said transparent platen,
said ramp being contained in said frame.

3. The document feeding device according to claim 2, said scanner being movably mounted within said frame adjacent to said scanner side of said transparent platen.

4. The document feeding device according to claim 1, said feeding path further comprising:
a roller feeding documents in a process direction from said document placing tray to said document ejection tray.

5. A device, comprising:
a frame;
a transparent platen contained within said frame, said transparent platen having a sheet side and a scanner side, opposite said sheet side;
a scanner located on said scanner side of said transparent platen, said transparent platen having a constant velocity transport (CVT) scanning position at a first end of said transparent platen; and
a ramp at said first end of said transparent platen defining a boundary of said CVT scanning position.

6. The device according to claim 5, further comprising:
a document placing tray located on said sheet side of said transparent platen; and
a document ejection tray positioned above said document placing tray, said document placing tray being between said document ejection tray and said transparent platen.

7. The device according to claim 6, further comprising:
a feeding path extending from said document placing tray through said CVT scanning position on said transparent platen to said document ejection tray,
said feeding path comprising said ramp at said first end of said transparent platen.

8. A scanning device, comprising:
a transparent platen having a sheet side and a scanner side, opposite said sheet side;
a document placing tray located on said sheet side of said transparent platen;
a document ejection tray positioned above said document placing tray, said document placing tray being between said document ejection tray and said transparent platen;
a scanner located on said scanner side of said transparent platen, said transparent platen having a constant velocity transport (CVT) scanning position at an end of said transparent platen;
a ramp adjacent said end of said transparent platen; and
a feeding path extending from said document placing tray through said CVT scanning position on said transparent platen to said document ejection tray,
said feeding path comprising said ramp at said end of said transparent platen defining a boundary of said CVT scanning position, and
said ramp turning said feeding path from said transparent platen toward said document ejection tray.

9. The scanning device according to claim 8, further comprising:
a frame circumscribing said transparent platen,
said ramp being contained in said frame.

10. The scanning device according to claim 9, said scanner being movably mounted within said frame adjacent to said scanner side of said transparent platen.
